# EUROPEAN PATENT APPLICATION

(11) **EP 3 217 189 A1**
(43) Date of publication of application: **13.09.2017**
(21) Application number: 17158206.7
(22) Date of filing: 27.02.2017
(51) Int. Cl.: G01S 17/10, G01S 17/42, G01S 7/487, G01S 17/93

(54) **OBJECT DETECTOR AND SENSING APPARATUS**

(30) Priority: 10.03.2016 JP 2016046436
(71) Applicant: Ricoh Company, Ltd., Tokyo 143-8555 (JP)
(72) Inventor: IMAI, Shigeaki, Ohta-ku, Tokyo 143-8555 (JP)
(74) Representative: J A Kemp

(57) **Abstract**

An object detector (100) includes a light-projection system (10) including a light source (11); a light-receiving element (42) to receive light emitted from the light-projection system (10) and reflected by an object; and a signal processing circuit (44c). The signal processing circuit (44c) adds an offset signal, which temporally changes an offset amount, to a voltage signal output from the light-receiving element (42) that varies according to an output current of the light-receiving element (42).

## Description

### BACKGROUND

### Technical Field

Embodiments of the present disclosure relate to an object detector and a sensing apparatus.

### Related Art

There have been known devices that include a light-projection system and a light-receiving system to detect the presence of an object and information regarding the object, such as the distance to the object (see JP-2004-184333-A, JP-H11-038137-A, JP-H08-304535-A, and JP-S63-101880-A).

However, there is room for improvement in the accuracy of detection of information regarding the object in the techniques disclosed in JP-2004-184333-A, JP-H11-038137-A, JP-H08-304535-A, and JP-S63-101880-A.

### SUMMARY

In an aspect of this disclosure, there is provided an object detector that includes a light-projection system including a light source; a light-receiving element to receive light emitted from the light-projection system and reflected by an object; and a signal processing circuit. The signal processing circuit adds an offset signal, which temporally changes an offset amount, to a voltage signal output from the light-receiving element that varies according to an output current of the light-receiving element.

In another aspect of this disclosure, there is provided a sensing apparatus that includes the object detector described above and a monitoring controller. The monitoring controller obtains information regarding an object that includes at least one of a presence of the object, a direction of movement of the object, and a speed of movement of the object, according to an output of the object detector.

According to embodiments of the present disclosure, the accuracy of detection of information regarding an object can be improved.

### BRIEF DESCRIPTION OF THE DRAWINGS

The aforementioned and other aspects, features, and advantages of embodiments of the present disclosure will be better understood by reference to the following detailed description when considered in connection with the accompanying drawings, wherein:
FIG. 1 is a block diagram of a schematic configuration of an object detector according to an embodiment of the present disclosure;
FIG. 2A is an illustration of a projection optical system and a synchronous system;
FIG. 2B is an illustration of a light-receiving optical system;
FIG. 2C is a schematic view of an optical path from a laser diode (LD) to a reflection mirror and another optical path from the reflection mirror to a time-measuring photo diode (PD);
FIG. 3 is a timing chart of a synchronization signal and a LD drive signal;
FIG. 4A is an illustration of an emitted light pulse and a reflected light pulse;
FIG. 4B is an illustration of a binarized emitted light pulse and a binarized reflected light pulse;
FIG. 5 is an illustration of a time-of-flight (TOF) method;
FIG. 6 is a block diagram of an example configuration of a PD (photodiode) output detector according to an embodiment of the present disclosure;
FIG. 7 is a schematic view of a waveform of a received-light signal in which rain and an object are detected;
FIG. 8 is a schematic view of a waveform of another received-light signal in which ghost from a window and an object are detected;
FIG. 9A is an illustration of the waveform of a received-light signal without sunlight;
FIG. 9B through FIG. 9D are diagrams each illustrating the waveform of a received-light signal with sunlight;
FIG. 10A is a timing chart of a signal of light reflected from an object;
FIG. 10B is a timing chart of an offset signal;
FIG. 10C is a timing chart of a signal in which the offset signal is added to the signal of light reflected from the object;
FIG. 11A is a circuit diagram of a hysteresis comparator;
FIG. 11B is an illustration of a detection threshold;
FIG. 12 is a circuit diagram of a binarizing circuit of the PD output detector;
FIG. 13A is a circuit diagram of an offset impart circuit;
FIG. 13B is a timing chart of a voltage input into the offset impart circuit;
FIG. 13C is a timing chart of an offset signal;
FIG. 14 is a circuit diagram of the offset impart circuit with the binarizing circuit (the hysteresis comparator) connected;
FIG. 15A through FIG. 15C are timing charts of an LD drive signal, a voltage input into the offset impart circuit, and an offset signal, respectively according to an embodiment of the present disclosure;
FIG. 16A through FIG. 16C are timing charts of an LD drive signal, a voltage input into the offset impart circuit, and an offset signal, respectively according to another embodiment of the present disclosure;
FIG. 17A through FIG. 17E are timing charts of an LD drive signal, an emitted-light waveform, a received-light waveform prior to a current-voltage conversion, a voltage input into an offset impart circuit, and an offset signal, respectively;
FIG. 18A is an illustration of a received light waveform with the offset signal added when a low-reflection object is detected;
FIG. 18B is an illustration of a received light waveform with the offset signal added when a high-reflection object is detected;
FIG. 19 is an illustration of a sensing apparatus;
FIG. 20A is a timing chart of a signal of light reflected from an object;
FIG. 20B is a timing chart of an offset signal; and
FIG. 20C is a timing chart of a signal in which the offset signal is added to the signal of light reflected from the object.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

A description is provided of an object detector 100 according to one embodiment of the present disclosure referring to the drawings.

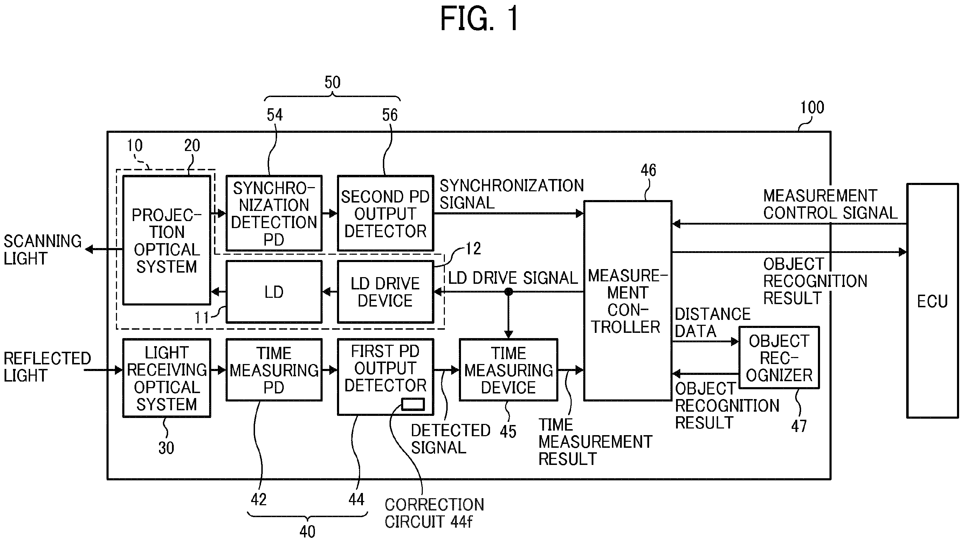

FIG. 1 is a block diagram of a schematic configuration of the object detector 100.

The object detector 100 is a scanning light detection and ranging (LiDAR) device, which is mounted on a vehicle as a mobile body 400, for example. The scanning LiDAR emits light toward an object, such as a preceding vehicle, a parked vehicle, an obstacle, or a pedestrian, and receives light reflected by (scattered at) the object to detect information (hereinafter, referred to as "object information") regarding the object, such as the distance to the object. The object detector 100 is powered by the vehicle battery.

As illustrated in FIG. 1, the object detector 100 includes a light-projection system 10, a light receiving optical system 30, a detection system 40, a time measuring device 45, a synchronous system 50, a measurement controller 46, and an object recognizer 47.

The light-projection system 10 includes a laser diode (LD) 11 as a light source, an LD drive device 12, and a projection optical system 20.

The LD 11, which is also called an edge-surface emitting laser, is driven by the LD drive device 12 to emit a laser beam. The LD drive device 12 causes the LD 11 to emit a laser beam, using an LD drive signal, which is a rectangular pulse signal, output from the measurement controller 46. The LD drive device 12 includes, for example, a capacitor connected to the LD 11 to supply electric current to the LD 11, a transistor to switch conduction and non-conduction between the capacitor and the LD 11, and a charger to charge the capacitor. The measurement controller 46 starts or stops the measurement in response to a measurement control signal (a measurement start signal and a measurement stop signal) from an electronic control unit (ECU) on vehicle.

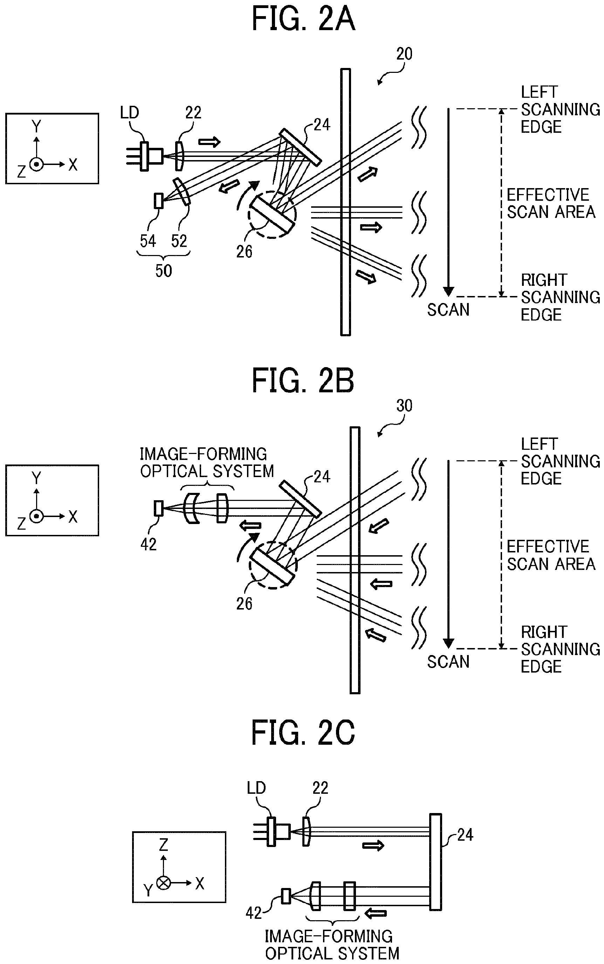

A description is provided below of the projection optical system 20, the synchronous system 50, and the light receiving optical system 30, using a three-dimensional rectangular coordinate system illustrated in FIGs. 2A, 2B, and 2C as appropriate, in which a vertical direction is a Z-axis direction.

FIG. 2A schematically illustrates the projection optical system 20 and the synchronous system 50. FIG. 2B schematically illustrates the light receiving optical system 30.

The projection optical system 20 includes a coupling lens 22, a reflection mirror 24, and a rotating mirror 26 as a deflector. The coupling lens 22 is disposed on the optical light path emitted from the LD. The reflection mirror 24 is disposed on the optical path of the light having passed through the coupling lens 22. The rotating mirror 26 is disposed on the optical path of the light reflected from the reflection mirror 24. In this case, the reflection mirror 24 is disposed on the optical path connecting the coupling lens 22 and the rotating mirror 26, folding the optical path to reduce the size of the object detector 100.

Through such optical path, the light emitted from the LD is shaped into a predetermined beam profile by the coupling lens 22, and the shaped light is then reflected from the reflection mirror 24. The rotating mirror 26 deflects the reflected light around the axis Z within a predetermined range of deflection.

The light deflected by the rotating mirror 26 corresponds to light projected by the projection optical system 20, which is light emitted from the object detector 100.

The rotating mirror 26 includes a plurality of reflection faces around the axis of rotation (axis Z), to reflect (deflect) the light reflected from the reflection mirror 24 while rotating around the axis of rotation, thereby causing the light to unidimensionally scan an effective scan area corresponding to the range of deflection in a horizontal one-axis direction (Y-axis direction). In this case, the range of deflection, i.e., the effective scan area lies on +X side. Hereinafter, the direction of rotation of the rotating mirror 26 is referred to as a "direction of rotation of mirror".

The rotating mirror 26 includes, as illustrated in FIG. 2A, two reflection faces opposed to each other. Alternatively, in some embodiments, the configuration is not limited to this configuration, and the rotating mirror 26 includes one reflection face or three or more reflection faces. Alternatively, in some embodiments, the rotating mirror 26 includes at least two reflection faces, which are tilted at different angles with respect to the axis of rotation (axis Z), to switch an area to be scanned and detected in Z-axis direction.

The light receiving optical system 30 includes, as illustrated in FIG. 2B, the rotating mirror 26, the reflection mirror 24, and an image-forming optical system. The rotating mirror 26 reflects light projected from the projection optical system 20 and reflected (scattered) by an object disposed within an effective scan area. The reflection mirror 24 reflects the light reflected from the rotating mirror 26. The image-forming optical system is disposed on the optical path of the light reflected from the reflection mirror 24, to form an image of the light reflected from the reflection mirror 24 onto a time measuring photodiode (PD) 42.

In the present embodiment, the projection optical system 20 and the light receiving optical system 30 are disposed in the same housing. The housing has an opening in the optical light path emitted from the projection optical system 20 and in the optical light path entered into the light receiving optical system 30. The opening is sealed with a window (a light transmission window member). For example, the window may be made of glass or resin.

FIG. 2C is an illustration of an optical path from the LD 11 to the reflection mirror 24 and another optical path from the reflection mirror 24 to the time measuring PD 42.

As is clear from FIG. 2C, the projection optical system 20 and the light receiving optical system 30 overlap in Z-axis direction. The rotating mirror 26 and the reflection mirror 24 are common between the projection optical system 20 and the light receiving optical system 30. Such a configuration reduces relative misalignment between the range of illumination of the LD and the range of light receivable by the time measuring PD 42 on an object, thus achieving stable detection of the object.

As illustrated in FIGs. 1 and 2B, the detection system 40 includes the time measuring PD 42, and a first PD output detector 44. The time measuring PD 42 receives, through the light receiving optical system 30, light projected from the projection optical system 20 and reflected by an object disposed within the effective scan area. The first PD output detector 44 detects a received light signal that is a voltage signal (a received-light signal) according to an output current (a current signal) from the time measuring PD 42.

The light projected from the projection optical system 20 and reflected (scattered) by an object proceeds, via the rotating mirror 26 and the reflection mirror 24, to the image-forming optical system, and is focused on the time measuring PD 42 through the image-forming optical system (see FIG. 2B). In FIG. 2B, the reflection mirror 24 is disposed between the rotating mirror 26 and the image-forming optical system, folding the optical path to reduce the size of the system. In this case, the image-forming optical system includes two lenses (image-forming lenses). However, in some embodiments, the image-forming optical system may include a single lens or three or more lenses. Alternatively, in some embodiments, a mirror optical system may be employed for the image-forming optical system.

As illustrated in FIGs. 1 and 2A, the synchronous system 50 includes a synchronization lens 52, a synchronization detection PD 54, and a second PD output detector 56. The synchronization lens 52 is disposed on an optical light path. The light is emitted from the LD, advancing through the coupling lens 22. The light is then reflected from the reflection mirror 24, and deflected by the rotating mirror 26. The deflected light is reflected again from the reflection mirror 24. The synchronization detection PD 54 is disposed on the optical path of the light having passed through the synchronization lens 52. The PD output detector 56 detects a voltage signal (a received-light signal) according to current output from the synchronization detection PD 54.

Specifically, the reflection mirror 24 is disposed upstream from the range of deflection in the direction of rotation of the rotating mirror 26. The light deflected on the rotating mirror 26 upstream from the range of deflection enters the reflection mirror 24. The light deflected on the rotating mirror 26 and reflected from the reflection mirror 24 enters the synchronization detection PD 54 via the synchronization lens 52.

It is to be noted that the reflection mirror 24 is disposed downstream from the range of deflection in the direction of rotation of the rotating mirror 26 in some embodiments. Further, the synchronous system 50 may be disposed on the optical path of the light deflected on the rotating mirror 26 and reflected from the reflection mirror 24.

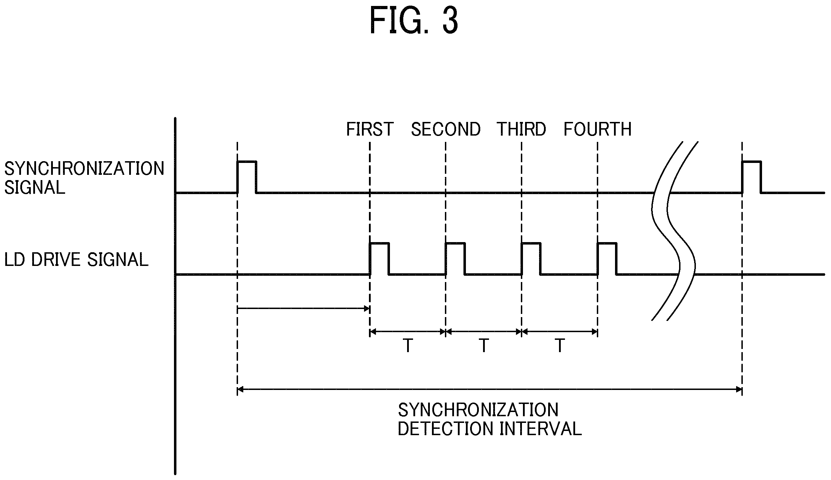

Rotation of the rotating mirror 26 causes the synchronization detection PD 54 to output a current every time light reflected from the reflection face of the rotating mirror 26 strikes the synchronization detection PD 54, to the second PD output detector 56. That is, the second PD output detector 56 periodically outputs a signal (synchronization signal) (refer to FIG. 3).

Emitting light for synchronization to irradiate the synchronization detection PD 54 with light coming from the rotating mirror 26 allows the timing of rotation of the rotating mirror 26 to be obtained from the timing of light receiving of the synchronization detection PD 54.

With elapse of a predetermined length of time after the LD emits light for synchronization, the LD emitting pulsed light allows the effective scan area to be optically scanned. That is, the LD emits pulsed light during a period of time before and after the timing of illuminating the synchronization detection PD 54, thereby optically scanning the effective scan area.

In this case, examples of the light-receiving element for measuring time and detecting synchronization include a photo diode (PD) as described above, an avalanche photo diode (APD), and a single photon avalanche diode (SPAD) as a Geiger mode APD. The APD and the SPAD have high sensitivity for accuracy of detection and the detection of distance.

The second PD output detector 56 detects the received-light signal, which is the voltage signal according to the output current from the synchronization detection PD 54, and then outputs a synchronization signal to the measurement controller 46.

The second PD output detector 56 converts a current output from the synchronization detection PD 54 into a voltage signal. The second PD output detector 56 further amplifies the voltage signal with a signal amplifier and binarizes the amplified voltage signal by using a comparator to output the binarized signal as the synchronization signal to the measurement controller 46.

The measurement controller 46 generates an LD (laser diode) drive signal based on the synchronization signal from the second PD output detector 56, and outputs the LD drive signal to the LD drive device 12 and the time measuring device 45.

That is, the LD drive signal is a delay pulsed lighting signal (periodic pulsed signal), which is delayed relative to the synchronization signal (refer to FIG. 3).

The first PD output detector 44 detects the received-light signal of the time measuring PD 42, and outputs the detected signal to the time measuring device 45.

The time measuring device 45 determines the timing of light reception at the time measuring PD 42 based on the detected signal (the timing of detection of the received-light signal at the first PD output detector 44) output from the first PD output detector 44, and measures the round-trip time of light having returned from the object based on the timing of light reception and the timing of rising of the LD drive signal to output the measured round-trip time as a time measurement result to the measurement controller 46.

The measurement controller 46 converts the measurement result from the time measuring device 45 into distance, to calculate a round-trip distance to and from an object and output one-half of the round-trip distance as distance data to the object recognizer 47.

The object recognizer 47 recognizes the position of an object based on a plurality of sets of distance data obtained by one or more scans, outputting an object recognition result to the measurement controller 46. The measurement controller 46 transfers the object recognition result to the ECU.

The ECU performs, based on the transferred object recognizer, steering control of a vehicle, such as auto-steering, and speed control, such as auto-braking.

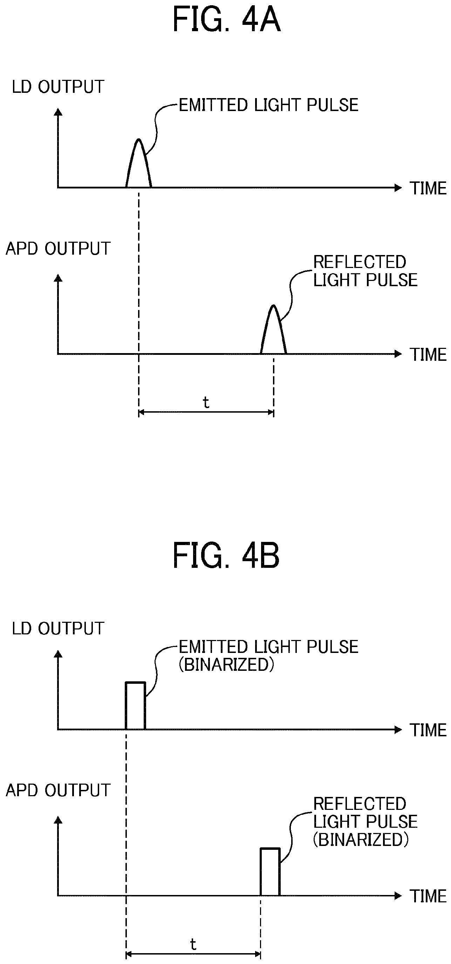

In this case, the LD drive device 12 drives the LD to emit pulsed light as illustrated in FIG. 4A (hereinafter, referred to as "emitted light pulse") while the rotating mirror 26 scans the effective scan area with light. Then, the time measuring PD 42 detects the pulsed light (hereinafter, referred to as "reflected light pulse") emitted from the LD and reflected (scattered) by an object. In FIG. 4A, instead of the PD, the APD is employed as light-receiving elements.

Measuring a time length t from when the LD emits a pulse (emitted light pulse) to when the APD detects the reflected light pulse determines the distance to the object. Regarding measurement of a time length, as illustrated in FIG. 4B, the emitted light pulse is a rectangular pulse received and binarized by the light-receiving elements, such as the PD, and the reflected light pulse is a rectangular pulse binarized by the PD output detector 44. A time measuring circuit may measure a time difference t between the timing of rising of the rectangular pulse of the emitted light pulse and the timing of rising of the rectangular pulse of the reflected light pulse. Alternatively, the waveforms of the emitted light pulse and the reflected light pulse are subjected to an analog-to-digital (A/D) conversion to obtain digital data, and a time length (time difference) t is measured by correlation calculation of the output signal of the LD and the output signal of the APD.

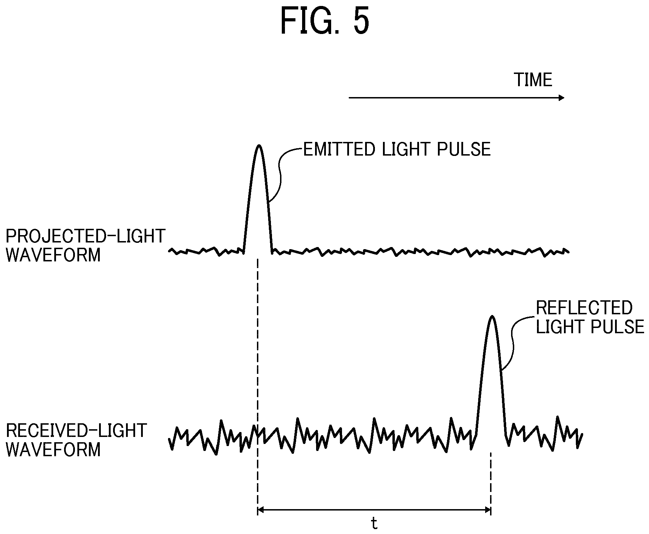

As described above, in the present embodiment, the Time of Flight (TOF) method is applied (refer to FIG. 5). That is, in the present embodiment, the LD 11 as a light source emits pulsed light. The pulse width of the emitted light ranges from several nanoseconds (ns) through several dozen ns. The projection optical system 20 projects the pulsed light. The emitted light having been reflected by an object returns and enters the time measuring PD 42 via the light receiving optical system 30. At this time, the time measuring PD 42 outputs photoelectric current to the first PD output detector 44.

As illustrated in FIG. 5, a typical waveform of projected light (projected-light waveform) has a low noise. By contrast, light reflected and scattered from an object typically has a low intensity such that when the reflected light is amplified by an amplifier, noise increases in the waveform of received light (received-light waveform).

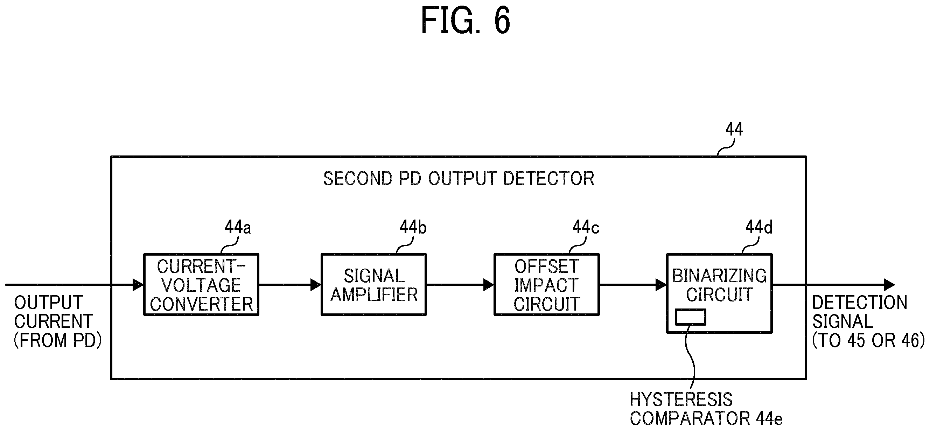

FIG. 6 is a block diagram of a configuration of the first PD output detector 44 of the detection system 40.

As illustrated in FIG. 6, the first PD output detector 44 includes a current-voltage converter 44a, a signal amplifier 44b, an offset impart circuit 44c, and a binarizing circuit 44d.

The current-voltage converter 44a converts a current output from the time measuring PD 42 into a voltage signal (a received-light signal), and outputs the converted voltage signal to the signal amplifier 44b.

The signal amplifier 44b amplifies an input received-light signal and sends the signal to the offset impart circuit 44c.

The offset impart circuit 44c adds an offset signal to the received-light signal input to the offset impart circuit 44c, and sends the signal to the binarizing circuit 44d.

The binarizing circuit 44d binarizes the received-light signal based on a threshold value and outputs the binarized signal (digital signal) as a detected signal to the time measuring device 45.

The following describes the reason why the first PD output detector 44 further includes the offset impart circuit 44c.

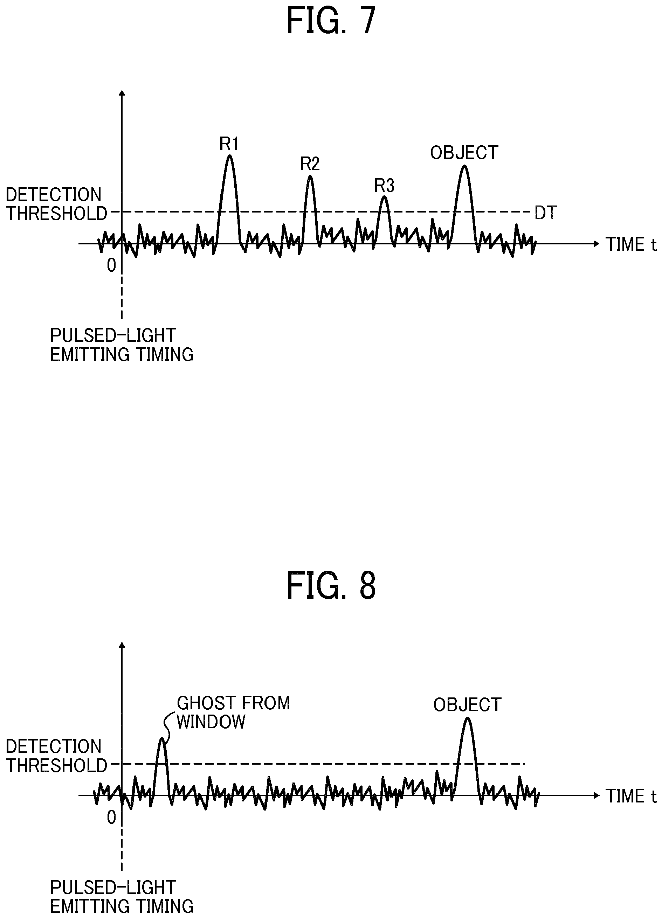

FIG. 7 is an illustration of a waveform of a received-light signal in which rain and an object are detected. In FIG. 7 in which time 0 refers to a timing of emitting pulsed light (a pulsed-light emitting timing), three types of rain R1 through rain R3 and one object are detected. When a detection threshold value to detect a received-light signal is set to the level of a broken line DT in FIG. 7, rain R1 through rain R3 and one object are detected. In such a detection scenario, it is desirable that rain be recognized as not a danger and the object be recognized as a danger. However, with the detection results in FIG. 7, it is impossible to distinguish between rain and an object. Thus, the position of an object that poses a danger is unrecognizable. Such a case is also referred to as "erroneous detection" in the present disclosure.

FIG. 8 is an illustration of a waveform of a received-light signal in which ghost from a window and an object are detected. When ghost from a window occurs, pulsed light reflected from the ghost of the window and pulsed light reflected from an object that is near the window mix with each other and fails to separate from each other, resulting in failure to detect the object near the window. To prevent such circumferences, increasing a detection threshold value reduces a detectable distance to an object placed at a long distance.

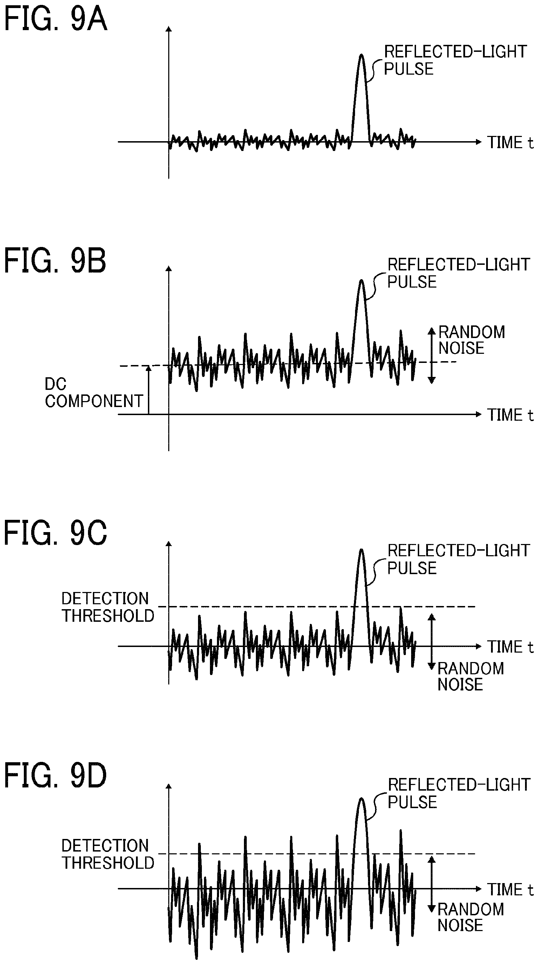

FIG. 9A is an illustration of a waveform of a received-light signal without sunlight, and FIG. 9B through FIG. 9D each illustrates a waveform of a received-light signal with sunlight. With sunlight (see FIG. 9B), a direct current (DC) component and random noise (shot noise) increase compared to without sunlight (see FIG. 9A). Filters, such as high-pass filters, can eliminate the DC component. However, the high-pass filter fails to eliminate the random noise (see FIG. 9C).

In an actual vehicle travel environment, when sunlight that has been reflected by a high-reflection object, such as a window glass or a hood of a vehicle enters the light-receiving elements with a strong intensity, shot noise increases and thereby the amount of noise exceeds the detection threshold value as illustrated in FIG. 9D. In such a case, discriminating signal from noise is impossible, resulting in erroneous detection.

When the high-reflection object is near the LiDAR device, the intensity of sunlight that enters the light-receiving elements of the LiDAR device increases and thereby shot noise increases, thus increasing the possibility of the occurrence of the phenomenon that the amount of noise exceeds the detection threshold value. As a result, the erroneous detection might occur more frequently.

That is, the erroneous detection might frequently occur in the atmospheric disturbance, such as rain, snow, and fog, or when a high-reflection object is at short distance. Hereinafter, an object that is highly reflective and is near from the LiDAR device is referred to also as "short-range high-reflection object". An object that is placed distant from the LiDar device is referred to also as "long-range object".

Accordingly, the present inventor has incorporated the offset impart circuit 44c into the first PD output detector 44 to prevent the occurrence of the erroneous detection.

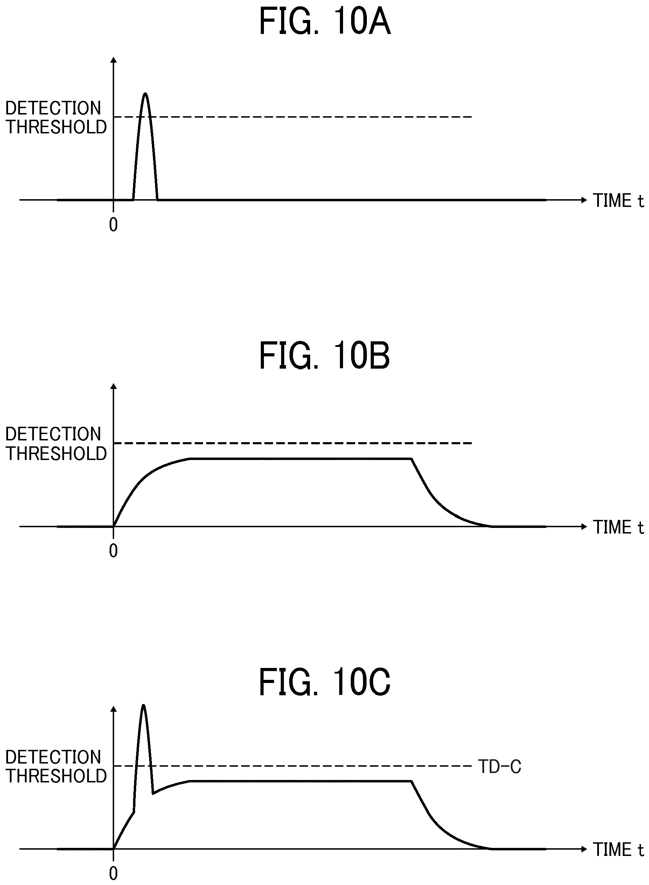

FIG. 10A is a timing chart of a received-light signal (hereinafter, referred to also as "signal from an (the) object") of light reflected from the object. FIG. 10B is a timing chart of an offset signal. FIG. 10C is a timing chart of a signal in which the offset signal is added to the signal from the object.

As illustrated in FIG. 10B for example, the offset signal generated in the offset impart circuit 44c starts from 0, monotonously increases, asymptotically approaches a predetermined value, and monotonically decreases back to 0.

When the signal from the object in FIG. 10A and the offset signal in FIG. 10B are superimposed on each other, the signal as illustrated in FIG. 10C is obtained. In FIG. 10C, the detection threshold value is set to a level as indicated by TD-C, and pulsed light is emitted at time 0. In the case of detecting a signal of light reflected from the short-range high-reflective object that is detected relatively early and has higher intensity, the difference between a base level (a signal level when no light returns from an object) and the detection threshold value increases. Accordingly, even when a signal that comes from rain and the shot noise due to sunlight reflected from the short-range high-reflection object significantly increase, short noise is less likely to exceed the detection threshold value, and thus the erroneous detection is less likely to occur.

In the case of detecting a signal of light reflected from the long-range object that is detected relatively late and has smaller intensity, the base line is apparently raised by adding the offset signal to the signal from the object, and the difference between the base line and the detection threshold decreases (see the flat portion in FIG. 10C), thus preventing a reduction in accuracy of detection.

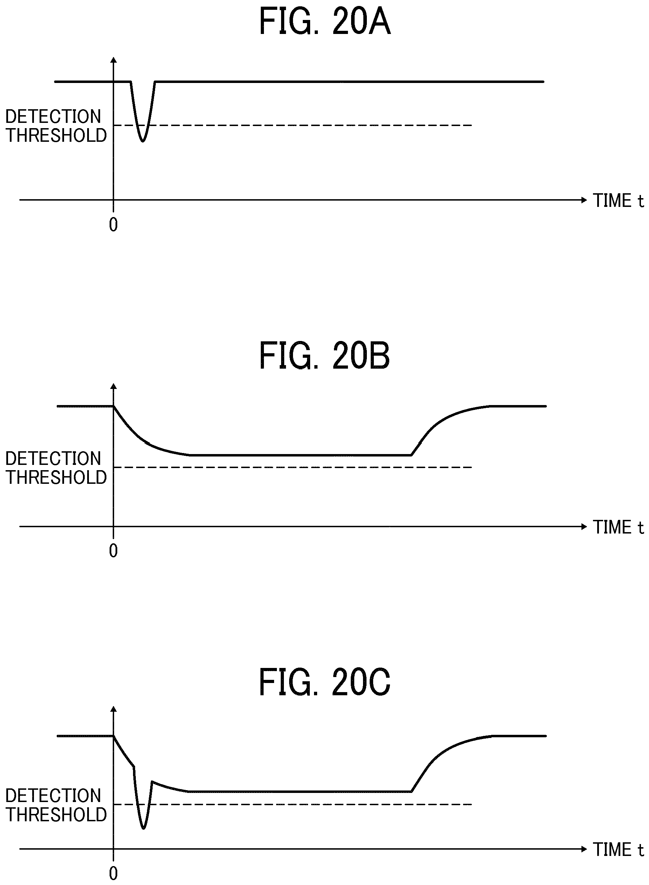

In the configuration of the first PD output detector 44 (a light-receiving circuit) described above, the signal protrudes upward from the base line. However, the present disclosure is not limited to this configuration, and the configuration in which the signal protrudes downward from the base line as illustrated in FIGs. 20A through 20C is available in some embodiments.

FIG. 20A is a timing chart of a signal from an object. FIG. 20B is a timing chart of an offset signal. FIG. 20C is a timing chart of a signal in which the offset signal is added to the signal from an object.

As illustrated in FIG. 20B for example, the offset signal generated in the offset impart circuit 44c starts from 0, monotonously decreases, asymptotically approaches a predetermined value, and monotonically increases back to 0.

As described above, adding the offset signal to the signal from the object allows the reduction in accuracy of detection of a long-range object to be prevented, and further allows the erroneous detection of the long-range object due to the atmospheric disturbance, such as rain, snow, and fog, and the presence of a short-range high-reflection object to be prevented.

It is also conceivable to change the detection threshold with the use of such a signal (refer for example to JP-1996-304535A1 and JP-1988-101880A1). The following discusses such a configuration.

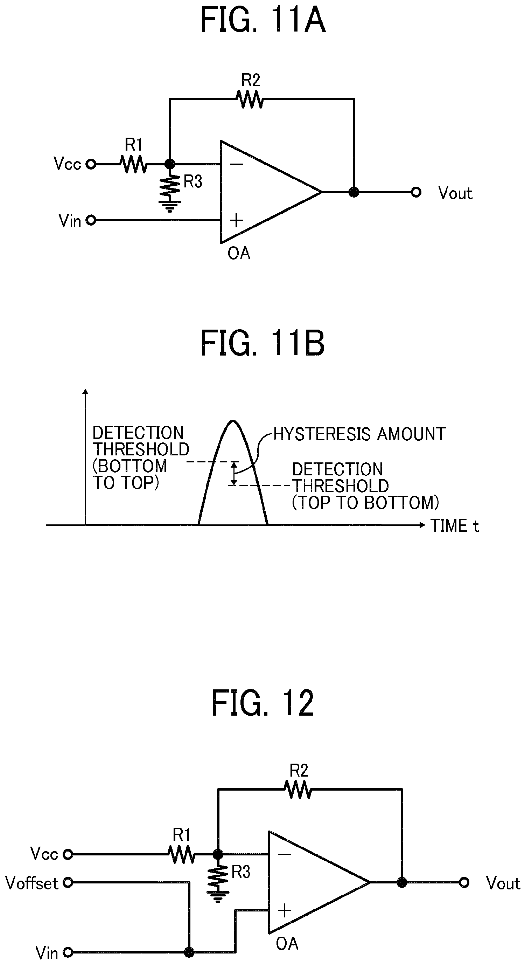

FIG. 11A is a circuit diagram of a hysteresis comparator 44e. The hysteresis comparator 44e in the present embodiment generates a desired threshold voltage by the resistor division of the source voltage (Vcc) and inputs the generated threshold voltage into the negative terminal of the operational amplifier (OA). The OA receives a signal through the positive terminal and compares the input signal (Vin) with the threshold voltage. The output of the comparator is switched on when the input signal (Vin) exceeds the threshold voltage. The hysteresis comparator 44e can differentiate the voltage level between the case in which a signal traverses the threshold value upward and the case in which a signal traverses the threshold value downward. That is, the hysteresis comparator is a circuit that allows for a variable threshold value and that prevents switching on the comparator in response to noise. When the hysteresis comparator 44e in the present embodiment is employed in the LiDAR device, the hysteresis comparator is switched on in response to circuit noise, thus preventing the erroneous detection. Note that resistors R1 and R2 are major components and a resistor R3 is optional in the hysteresis comparator in FIG. 11A.

In the present embodiment, the source voltage (Vcc) is temporally changed to temporally change the threshold value. However, in such a case, the amount of hysteresis also temporally changes (refer to FIG. 11B). That is, it is impossible to independently control the changes in threshold value over time and the amount of hysteresis. Thus, difficulties arise in preventing both the erroneous detection due to the atmospheric disturbance, such as rain, snow, and fog, and the short-range high-reflection object and the erroneous detection due to circuit noise.

To allow for the prevention of the above-described erroneous detection, the binarizing circuit 44d has a circuit configuration that includes the hysteresis comparator 44e, in which an offset signal (Voffset) is added to an input signal (Vin) as illustrated in FIG. 12, to generate a signal as illustrated in FIG. 10C. This configuration can independently control the temporal change in offset signal (Voffset) and the temporal change in source voltage (Vcc) that temporally change the hysteresis amount, thus achieving the prevention of the erroneous detection due to the atmospheric disturbance, such as rain, snow, and fog, and the short-range high-reflection object and the erroneous detection due to circuit noise.

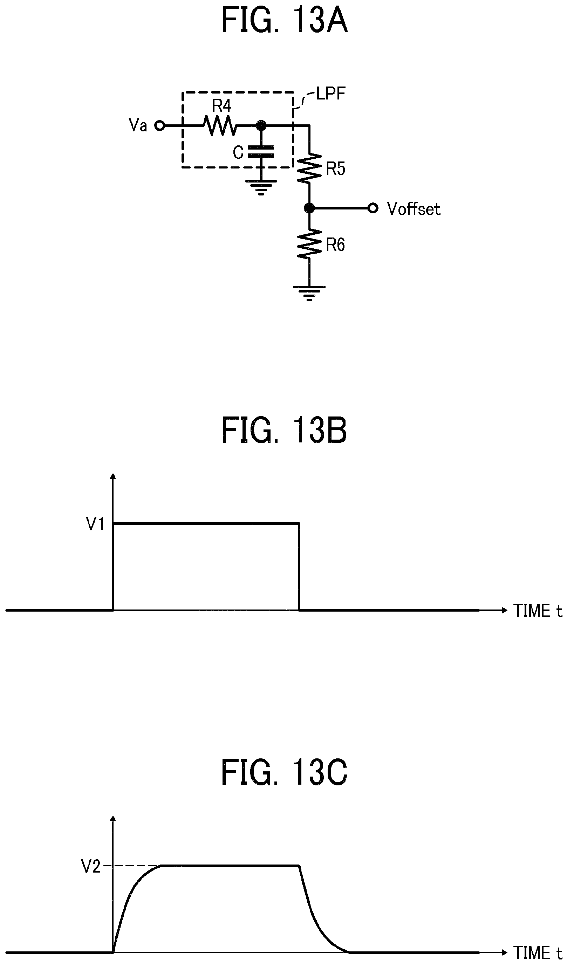

The offset impart circuit 44c to generate the offset signal as illustrated in FIG. 10B may be implemented with the circuitry as illustrated in FIG. 13A.

The symbol "Va" in FIG. 13A denotes a rectangular signal with an amplitude V1 (refer to FIG. 13B). The rectangular signal Va is input into a low pass filter LPF that includes a resistor R4 and a capacitor C, and a desired level (value) voltage (V2) is obtained by the resistor division. Thus, the offset signal (Voffset) is obtained (refer to FIG. 13C). As described above, the offset signal as illustrated in FIG. 10B is implemented in a very simple circuit, which is very advantageous in size and cost. Note that resistors R5 and R6 are optional in the circuit in FIG. 13A. The offset impart circuit preferably includes at least a low pass filter. Note that the configuration of the low pass filter LPF may be modified as appropriate. For example, the low pass filter may be configured to be an active low pass filter using an operational amplifier.

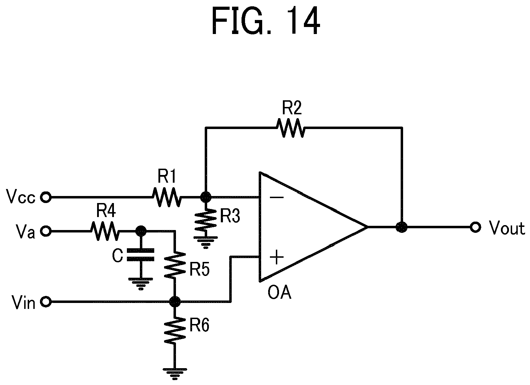

FIG. 14 is an illustration of a circuitry in which the offset impart circuit 44c is combined with the binarizing circuit 44d (a hysteresis comparator). This circuitry can prevents the erroneous detection due to the atmospheric disturbance, such as rain, snow, and fog, and the short-range high-reflection object and the erroneous detection due to circuit noise.

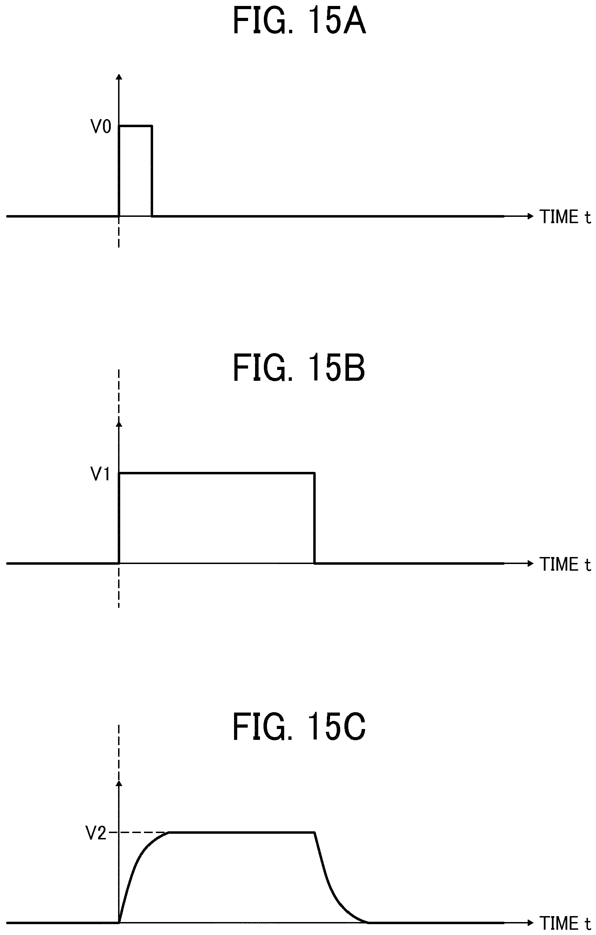

In the present embodiment, the symbol "Va" in FIG. 15B is preferably a signal that rises in synchronization with the rise of the LD drive signal. This configuration can properly maintain the temporal relation between the timing of light emission of the LD and the timing of the offset signal, thus allowing for a high-accurate range finding.

Note that the pulse light emitted from the LiDAR device preferably has a small width, e.g., a width ranging from a few ns (nanoseconds) through a few tens of 10 ns from the viewpoint of safety of the LiDAR device. The LD drive signal also preferably has a rectangular wave with the same degree of width as the width of the pulse light. The signal Va preferably changes with the range obtained by the range finding. When the maximum detection distance is 200 m (meters) for example, the pulse width of the signal Va is preferably greater than or equal to 1.33 usec.

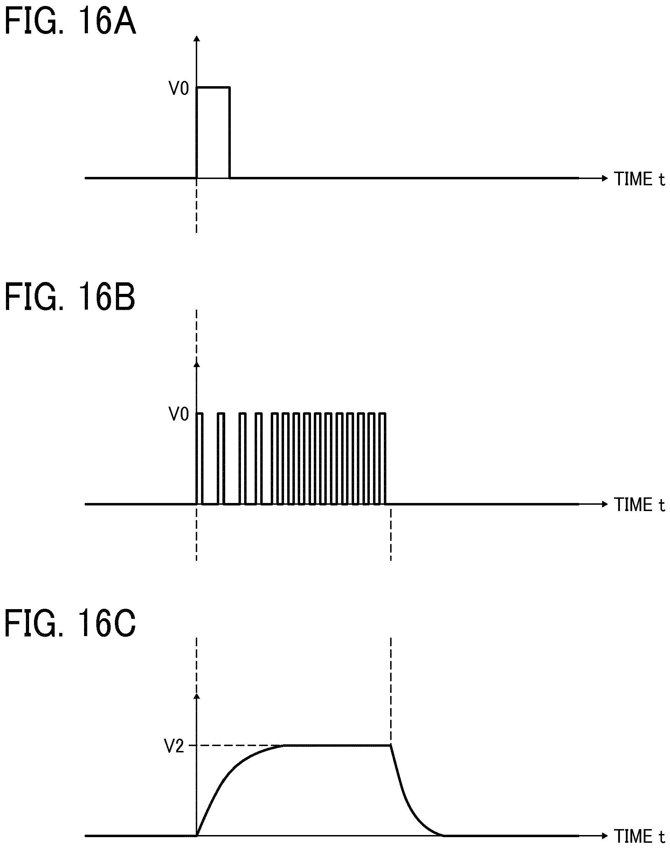

As an alternative method for generating the offset signal as illustrated in FIG. 10B, the original signal Va of the offset signal (refer to FIG. 16C) is configured to be a pulse signal group including a plurality of pulse signals that temporally change duty, and a leading pulse signal of the plurality of pulse signals may be in synchronization with the LD drive signal. In this configuration, that includes the low pass filter; as duty is increased, the voltage level increases, and as duty is reduced, the voltage level decreases. Further, any desired signal level can be obtained by the resistor division. In FIG. 16B, a pulse period is temporally changed with a constant pulse width to temporally change duty. In some embodiments, the pulse width may be temporally changed with a constant pulse period. Alternatively, in some embodiments, the pulse width and the pulse period may be temporally changed.

In the above description, the offset signal or the original signal of the offset signal starts rising at the same timing as the timing of rise of the LD drive signal. However, the present disclosure is not limited to this configuration. In some embodiments, the offset signal or the original signal of the offset signal may advance or delay by a predetermined time, which exhibits the same advantageous effects as those described above.

Note that the timing of rise of the offset signal differs with the circuit constant. Accordingly, the voltage signal (received-light signal) is preferably delayed in a temporal manner relative to the timing of the offset signal, and the offset signal is added to the delayed signal.

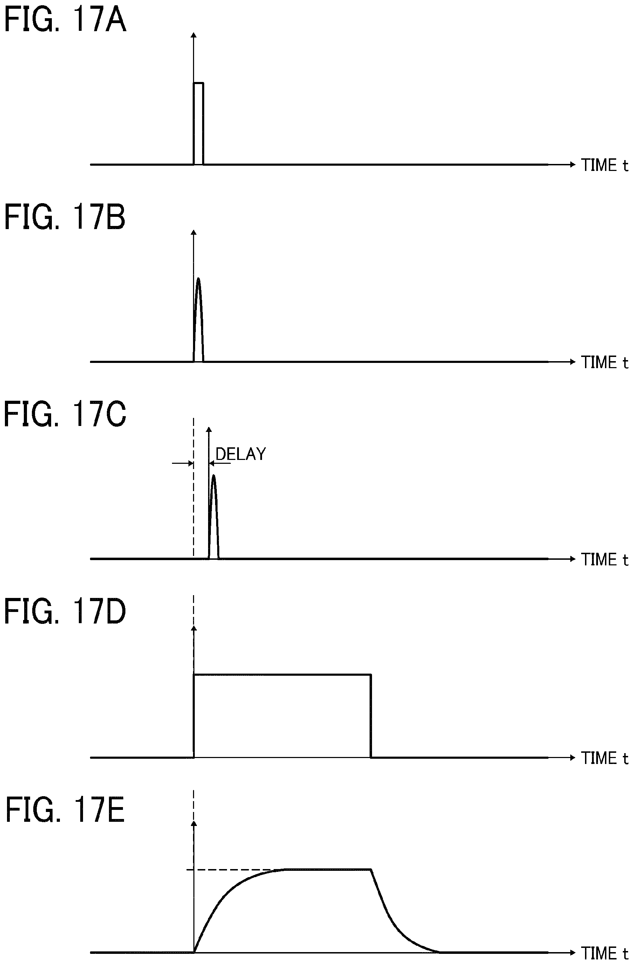

FIG. 17A through 17E are timing charts of a LD signal, a emitted-light waveform, a received-light waveform after the current-voltage conversion, the signal (Va), and the offset signal (Voffset), respectively to describe the example in which a received-light signal is delayed. In this case, an object is close to (at close range from) the object detector 100 for simplification. In such a configuration in which the received-light signal is delayed, the object close to the object detector 100 can be detected without using the unstable rise of the offset signal. Accordingly, the received-light signal on which the offset signal is superimposed can be stabilized, thus achieving a stable measurement. Note that the received-light signal can be delayed by using the operational amplifier.

Note that instead of the configuration in which the received-light signal is delayed, the LD drive signal may be delayed relative to the signal Va to exhibit the same advantageous effects as described above.

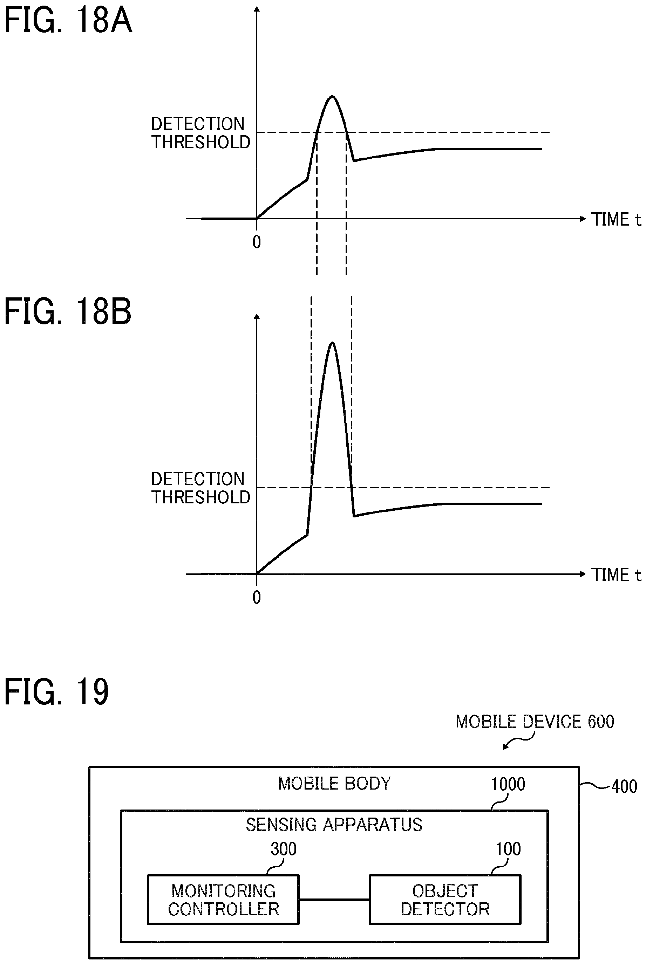

FIG. 18A is a schematic view of a received-light signal of light reflected or scattered from a high-reflection object (object having a high reflectivity). FIG. 18B is a schematic view of a received-light signal of light reflected or scattered from a low-reflection object (object having a low reflectivity) that is disposed on the same position as the position of the high-reflection object.

As can be seen from FIG. 18A and FIG. 18B, the detection timing differs with the reflectivity of the object, which is disposed at the same position, when the detection timing of the object is the timing at which the rising received-light signal traverses the detection threshold upward. More specifically, the period of time during which the received-light signal of the high-reflection object exceeds the detection threshold is greater than the period of time during which the received-light signal of the low-reflection object exceeds the detection threshold. That is, the detection timing of the received-light signal of the high-reflection object is earlier than the detection timing of the received-light signal of the low-reflection object. To handle such a circumstance, the detection timing is preferably corrected according to the period of time during which the received-light signal exceeds the detection threshold. More specifically, as the pulse width is greater, the amount of correction of the detection timing is reduced. As the pulse width is smaller, the amount of correction of the detection timing is increased. This can prevent the change in detection timing with reflectivity of an object.

In the above description, the detection timing is the timing at which the received-light signal traverses the detection threshold upward. However, no limitation is intended therein. Alternatively, in some embodiments, the detection timing may be determined based on the timing, at which the received-light signal traverses the detection threshold upward, and the timing, at which the received-light signal traverses the detection threshold downward. This configuration can correct the detection timing by correcting at least one of the above-described timings according to the period of time during which the received-light signal exceeds the detection threshold. In this case, a predetermined timing (for example, an intermediate timing) between two timings, at least one of which has been corrected, may be determined as the detection timing.

FIG. 19 is a schematic view of a sensing apparatus 1000 with the object detector 100. The sensing apparatus 1000, which is mounted on a mobile body 400, includes the object detector 100 and a monitoring controller 300 electrically connected to the object detector 100. The object detector 100 is mounted near a bumper or a rear-view mirror in a vehicle (the mobile body 400). The monitoring controller 300, based on the detection results of the object detector 100, estimates the size or shape of an object, and calculates the position and movement data of the object, recognizing the type of the object. The monitoring controller 300 ultimately judges presence of danger. With an affirmative judgment for danger, the monitoring controller 300 issues an alarm (alert) to an operator of the mobile body 400, to invite the operator's attention. Alternatively, the monitoring controller 300 issues an order to a steering controller of the mobile body 400 to avoid the danger by steering, or issues an order to the ECU to brake the mobile body 400. It is to be noted that the sensing apparatus 1000 receives power supply from a vehicle battery, for example.

Further, the monitoring controller 300 may be integrated into the object detector 100. Alternatively, in some embodiment, the monitoring controller 300 may be disposed separately from the object detector 100. In some embodiments, the monitoring controller 300 may perform a part of the control function of the ECU in some embodiments.

The above-described object detector 100 according to the present embodiment includes the light-projection system 10 including the light source (LD), the light-receiving element (time measuring PD 42) that receives light having been emitted from the light-projection system 10 and reflected by an object, and the signal processing circuit (offset impart circuit 44c) that adds the offset signal, in which the offset amount temporally changes, to a voltage signal (received-light signal) according to the output current of the light-receiving element.

The light having been emitted from the light-projection system 10 and reflected by an object changes the intensity according to the time period from the timing of light emission to the timing of light reception (round-trip time of light), i.e., the distance to an object. In general, as the distance to an object decreases, the intensity of light reflected from the object increases.

In the object detector 100 according to the present embodiment, the level of the received-light signal is raised by adding the offset signal thereto and the offset amount of the offset signal temporally changes, so that the accuracy of detection of received-light signal can be increased irrespective of the distance to the object (the intensity of the received light).

Thus, the object detector 100 according to the present embodiment can accurately detect information regarding an object.

The object detector 100 according to the present embodiment further includes the binarizing circuit 44d to binarize the voltage signal, to which the offset signal is added, by the threshold value (detection threshold).

Such a configuration can accurately detect a received-light signal.

Preferably, the offset signal monotonously increases from the first rising edge (refer to FIG. 10B), and the offset signal monotonously decreases from the first falling edge (refer to FIG. 20B).

In this case, the difference between the threshold value and the base level of the reflected-light signal increases when a short-range object, for which the round-trip time of light is relatively short and the amount of reflected light is relatively large, is detected. This can effectively prevents the erroneous detection due to the occurrence of ghost from the window of the object detector 100 and due to sunlight reflected by a window glass or a hood of a vehicle at a short range.

In the present embodiment, the offset signal may have extreme values for rising and falling.

Preferably, the offset signal asymptotically approaches a predetermined value between the first rising edge and the first falling edge.

This configuration reduces the difference between the threshold value and the base level of a received-light signal when a long-range object, for which the round-trip time of light is relatively long and the amount of reflected light is relatively small, is detected, thus allowing the reduction in accuracy of detection to be prevented.

In some embodiments, the offset signal may not asymptotically approach a predetermined value between the timing of rising and the timing of falling.

Preferably, the offset signal asymptotically approaches a predetermined value while increasing from the first rising edge to the first falling edge. Preferably, the offset signal asymptotically approaches a predetermined value while decreasing from the first falling edge to the first rising edge.

This configuration can stably prevent the reduction in accuracy of detection of an object that is at long range and has low reflectivity.

In some embodiments, the offset signal may asymptotically approach a predetermined value while decreasing from the first rising edge to the first falling edge, and the offset signal may asymptotically approach a predetermined value while increasing from the first falling edge to the first rising edge. Alternatively, in some embodiments, the offset signal may maintain a predetermined value from the first rising edge to the first falling edge, and the offset signal may maintain a predetermined value from the first falling edge to the first rising edge.

When the offset signal first rises, the above-described certain value is preferably less than the above-described threshold value. When the offset signal first falls, the above-described certain value is preferably greater than the above-described threshold value.

This configuration can prevent the detection of noise.

Preferably, the signal processing circuit (offset impart circuit 44c) temporally delays the voltage signal (received-light signal) relative to the timing of the offset signal, and the offset signal is added to the delayed signal.

In other words, the detection is preferably started some time after the offset signal rises. This configuration, which does not employ an unstable rising aspect of the offset signal, can prevent a reduction in accuracy of detection of a received-light signal.

Preferably, the object detector 100 further includes a correction circuit 44f to correct an output of the binarizing circuit 44d based on the period of time for the voltage signal added with the offset signal to traverse the threshold value.

This configuration can prevent the change in measurement time (the round-trip time of light) and measurement distance with reflectivity of an object.

The binarizing circuit 44d preferably further includes a hysteresis comparator 44e that allows the threshold value to differ between when the voltage signal (reftected-light signal) traverses the threshold value upward and when the voltage signal traverses the threshold value downward.

Using such a hysteresis comparator 44e is effective to reduce the effects of circuit noise. Using such a hysteresis comparator in the object detector 100 allows the hysteresis amount to be set independently of the offset signal, thus allowing for the above-described advantageous effects and the reduction in effects of circuit noise.

Preferably, the offset signal, which has passed through the low pass filter, is output in synchronization with the light-source drive signal (the LD drive signal) to drive the light source (LD 11).

Further, the signal output in synchronization with the light-source drive signal may be a single pulse signal having a longer pulse width than the pulse width of the light-source drive signal.

Further, the signal output in synchronization with the light-source drive signal may be a leading pulse signal of a pulse-signal group including a plurality of pulse signals that temporally change duty.

The light-projection system 10 preferably includes a deflector (the rotating mirror 26) to deflect light emitted from the light source (LD 11).

The light source, which includes an LD, projects pulsed light with a stable output.

The sensing apparatus 1000 includes the object detector 100 and the monitoring controller 300 to, according to the output of the object detector 100, obtain object data (at least one of the presence of an object, the position of the object, the direction of movement of the object, and the speed of movement of the object). The sensing apparatus 1000 reliably obtains the object data.

The sensing apparatus 1000 is mounted on the mobile body 400. The monitoring controller 300, based on at least one of the position data and the movement data of the object, judges the presence of danger, thereby providing effective data for avoiding danger to an operational control system and a speed control system of a mobile body 400, for example.

Further, a mobile device 600 including the sensing apparatus 1000 and the mobile body 400 including the sensing apparatus 1000 has excellent safety against impact.

The object detecting method according to the present embodiment includes emitting light from a light source (LD), receiving the light emitted from the light source and reflected from an object by a light-receiving element (time measuring PD 42), converting an output current of the light-receiving element into a voltage signal, adding an offset signal to the voltage signal, and binarizing the voltage signal added with the offset signal.

This configuration can accurately detect information regarding an object.

The object detecting method according to the present embodiment preferably further includes obtaining a timing of light reception of the light-receiving element based on a binarized timing, and calculating a distance to the object based on the timing of light emission of the light source and the timing of light reception.

This configuration can increase the accuracy of detection of the distance to an object.

It is to be noted that the configuration of the object detector according to the present embodiment may be modified as appropriate.

For example, the first PD output detector 44 may not include the signal amplifier 44b.

The signal processing circuit may include a signal amplifier and a low pass filter.

The binarizing circuit 44d of the first PD output detector 44 may include any type of comparator other than hysteresis comparators 44e.

The second PD output detector 56 may have the same configuration as the configuration of the first PD output detector 44. This configuration allows accurately detecting the voltage signal (received-light signal) according to the current output from the synchronization detection PD 54 and further increases the detection accuracy of the scanning timing.

The light-projection system 10 may be a scanning light system that employs a deflector. Alternatively, in some embodiments, the light-projection system 10 may be non-scanning system without a deflector. In other words, the light-projection system 10 according to at least one embodiment of the present disclosure preferably includes at least light source, and may include a lens in a subsequent stage to adjust the projection range.

According to the present embodiment, a single LD (end-surface emitting laser) is used for the light source. However, the present disclosure is not limited to this configuration. Examples of the light source include a laser diode (LD) array, in which a plurality of laser diodes are unidimensionally or two-dimensionally arranged, a Vertical Cavity Surface Emitting Laser (VCSEL), the VCSEL array, in which the VCSEL is unidimensionally or two-dimensionally arranged, lasers other than a semiconductor laser, and a light source other than lasers. Examples of the LD array, in which a plurality of laser diodes are unidimensionally arranged, include a stack LD array, in which a plurality of laser diodes are stacked, and another type of LD array, in which a plurality of laser diodes are horizontally lined up. As the semiconductor laser, the VCSEL is substituted for the LD, thereby including more luminous points within the array.

The projection optical system 20 may not include the coupling lens 22. Alternatively, the projection optical system 20 may include another type of lens.

The projection optical system 20 and the light receiving optical system 30 may not include the reflection mirror 24. That is, light emitted from the LD enters the rotating mirror 26 without the folded optical path.

The light receiving optical system 30 may not include a light receiving lens. Alternatively, the light receiving optical system 30 may include another type of optical element, such as a collecting lens.

Instead of the rotating mirror 26 as the deflector, other types of mirrors, such as a polygon mirror (rotating polygon mirror), a galvano mirror, and a micro electro mechanical system (MEMS) mirror, are applicable.

The synchronous system 50 may not include the synchronization lens 52. Alternatively, the synchronous system 50 may include another type of optical element, such as a collecting lens.

According to the present embodiment, a vehicle is taken as an example for the mobile body 400, on which the object detector 100 is mounted. Examples of the mobile body 400 include an airplane, a vessel, and a robot.

Further, specific numerical values and shapes taken for the above description are illustrative only, and can be modified as appropriate without exceeding beyond the scope of the present disclosure.

As is apparent from the above-description, the object detector 100, the sensing apparatus 1000, the mobile device 600, and the method for detecting an object according to the present embodiment of this disclosure is the technology that measures the distance to an object, utilizing the Time of Flight (TOF) method. Such a technology is widely used in the industries of the motion-capture technology, the range instruments, and the three-dimensional shape measurement technology, in addition to sensing a mobile body 400. Therefore, the object detector 100, the sensing apparatus 1000, and the mobile device of the present disclosure may not be mounted on a mobile body 400.

Hereinafter, a description is provided of process of thinking, in which the inventor has conceived of the embodiments described above.

As a device for determining a distance to an object, range finders are known. The LiDAR device described above applies the TOF method to measure the distance to an object, the TOF method in which a length of time is measured from when emitting pulsed light ranging from several ns through several dozen ns to an object and to when receiving the light having returned, thus obtaining the distance to the object. The LiDAR device, which is mounted on a vehicle for example, can detect the presence or absence, the distance to, and the speed of a vehicle or a human.

In range finding of the LiDAR device, sunlight reflected by the atmospheric disturbance, such as rain, snow, and fog, or sunlight reflected by the short-range high-reflection object, such as a window glass or a hood of a vehicle at short range enters the LiDAR device, which might cause the erroneous detection. To address this circumstance, the typical LiDAR device has the following configuration:
(1) two threshold values are set (JP-2004-184333-A1);
(2) sensitivity is temporally changed (JP-1999-038137-A1); and
(3) a threshold value is changed with time (JP-1996-304535-A1 and JP-1988-101880-A1).

The above-described (1) through (3) cause the following problems:
When two threshold values are set as in the case of (1), at least two comparators and time measuring circuits are necessary, which leads to an increase in cost and size of circuit. To temporally change the sensitivity in the case of (2), a double balanced mixer circuit is used. Such a circuit has a complex circuitry, thereby increasing the scale of the circuit, resulting in an increase in size of the device. In changing a threshold value with time in the case of (3), a hysteresis comparator is used to reduce the erroneous detection and detection errors due to circuit noise. In such a case, the amount of hysteresis changes depending on threshold voltage, and preventing both the reduction in the effects of circuit noise and the erroneous detection due to the atmospheric disturbance and the short-range high-reflection object is difficult.

To solve the above-described problems, the present inventor has proposed the object detector according to the above-described embodiments that is less vulnerable to the effects of noise, that is capable of preventing the erroneous detection due to the atmospheric disturbance, such as rain, snow, fog, and the short-range high-reflection object, and that is also capable of accurately detecting the information regarding an object.

## Claims

1. An object detector (100) comprising:
a light-projection system (10) including a light source (11);
a light-receiving element (42) to receive light emitted from the light-projection system (10) and reflected by an object; and
a signal processing circuit (44c) to add an offset signal, which temporally changes an offset amount, to a voltage signal output from the light-receiving element (42) that varies according to an output current of the light-receiving element (42).

2. The object detector (100) according to claim 1, further comprising a binarizing circuit (44d) to binarize the voltage signal, to which the offset signal has been added, by a threshold value.

3. The object detector (100) according to claim 2,
wherein the offset signal monotonously increases from a rising edge.

4. The object detector (100) according to claim 2 or 3,
wherein the offset signal asymptotically approaches a predetermined value between the rising edge and a falling edge.

5. The object detector (100) according to claim 4,
wherein the offset signal asymptotically approaches the predetermined value while increasing from the rising edge to the falling edge.

6. The object detector (100) according to claim 4 or 5,
wherein the predetermined value is less than the threshold value.

7. The object detector (100) according to claim 2,
wherein the offset signal monotonously decreases from a falling edge.

8. The object detector (100) according to claim 2 or 7,
wherein the offset signal asymptotically approaches a predetermined value between the falling edge and a rising edge.

9. The object detector (100) according to claim 8,
wherein the offset signal asymptotically approaches the predetermined value while decreasing from the falling edge to the rising edge.

10. The object detector (100) according to claim 9,
wherein the predetermined value is greater than the threshold value.

11. The object detector (100) according to any one of claims 2 through 10, wherein the signal processing circuit (44c) delays the voltage signal relative to a timing of the offset signal, and
wherein the signal processing circuit (44c) adds the offset signal to the voltage single delayed by the signal processing circuit (44c).

12. The object detector (100) according to any one of claims 2 through 11, further comprising a correction circuit (44f) to correct an output of the binarizing circuit (44d) based on a period of time during which the voltage signal with the offset signal added traverses the threshold value.

13. The object detector (100) according to any one of claims 2 through 12, further comprising a hysteresis comparator (44e) to differentiate a degree of the threshold value between a time when the voltage signal traverses the threshold value upward and a time when the voltage signal traverses the threshold value downward.

14. The object detector (100) according to any one of claims 1 through 13, wherein the signal processing circuit (44c) includes a low pass filter (LPF), and wherein the signal processing circuit (44c) outputs the offset signal having passed through the low pass filter (LPF), in synchronization with a light-source drive signal to drive the light source (11).

15. A sensing apparatus (1000) comprising:
the object detector (100) according to any one of claims 1 through 14; and
a monitoring controller (300) to obtain information regarding an object that includes at least one of a presence of the object, a direction of movement of the object, and a speed of movement of the object, according to an output of the object detector (100).
